# EUROPÄISCHE PATENTSCHRIFT

(11) **EP 1 016 169 B1**
(45) Veröffentlichungstag und Bekanntmachung des Hinweises auf die Patenterteilung: **24.03.2004**
(21) Anmeldenummer: 98948738.4
(22) Anmeldetag: 06.08.1998
(51) Int. Cl.: H01R 11/11, H01R 43/02

(54) **STROMÜBERTRAGUNGSELEMENT**
CURRENT TRANSMISSION ELEMENT
ELEMENT DE TRANSMISSION DE COURANT

(30) Priorität: 18.09.1997 DE 19741144
(43) Veröffentlichungstag der Anmeldung: 05.07.2000
(73) Patentinhaber: EPCOS AG, 81669 München (DE)
(72) Erfinder: STELZL, Gerhard, D-89518 Heidenheim (DE)
(74) Vertreter: Epping, Hermann, Fischer
(86) Internationale Anmeldenummer: PCT/DE1998/002263
(87) Internationale Veröffentlichungsnummer: WO 1999/014773

(56) Entgegenhaltungen:
- EP-A- 0 707 321
- US-A- 2 539 332
- US-A- 3 593 072
- US-A- 5 305 941
- US-A- 5 386 345

## Beschreibung

Die Erfindung betrifft ein Stromübertragungselement zur Kontaktstromübertragung an flammgespritzte Kontaktschichten eines Kondensatorwickels.

Kontaktstromübertragungen sind an Kondensatorwickeln mit flammgespritzten Kontaktschichten (Schoopschichten) bekannt.

Die Druckschrift US 3,593,072 beschreibt einen Kondensatorwickel mit einer Kontaktschicht, die mit einem nicht näher beschriebenen Maschenschirm aus Kupfer in bekannter Weise verbunden ist, an den widerum ein Anschlußdraht angelötet ist. Die größere Fläche des Maschenschirms stellt ein in höherem Maße ausgedehntes Ineinandergreifen zwischen Lot, Kontaktschicht und Maschenschirm bereit.

Aufgabe der vorliegenden Erfindung ist es, ein Stromübertragungselement anzugeben, das nicht angelötet zu werden braucht und sich an unebene Kontaktflächen anpasst.

Diese Aufgabe wird erfindungsgemäß mit einem Stromübertragungselement gelöst, das die Merkmale der nebengeordneten Ansprüche 1 oder 2 besitzt.

Vorteilhafte Ausgestaltungen des Gegenstandes der Erfindung sind in den Unteransprüchen angeführt. Die Erfindung ersetzt daher das übliche Anlöten von Kontakten durch eine Druckkontakt-Stromübertragung mit Hilfe eines verzinnten Metallmesh/Metallgewebes.

Aus der US 5,386,345 A ist ein Metallgewebe bekannt, das in üblicher Weise zur elektromagnetischen Abschirmung einer in einem Gehäuse angeordneten elektronischen Vorrichtung dient.

Hinweise, daß derartige Metallgewebe auch zu anderen Anwendungszwecken geeignet wären, sind dem Dokument nicht zu entnehmen.

Ein weiches gestricktes Metallmesh ergibt ein elastisches großflächiges Kontaktelement mit optimaler Anpassung an unebene Kontaktflächen.

Ausführungen mit zusätzlich ins Gewebe eingelagertem Zinn (Zinnbrücken) eigenen sich besonders gut für hohe Stromübertragungen.

Aus den zinndurchtränkten Gewebematten (Halbzeug) können alle benötigten Geometrien angefertigt werden (z. B. Stanzteile).

## Patentansprüche

1. Stromübertragungselement zur Kontaktstromübertragung an flammgespritzten Kontaktschichten eines Kondensatorwickels,
das aus einem gestrickten Metallmesh aus verzinnten Drähten besteht,
wobei das Metallmesh mit den flammgespritzten Kontaktschichten lötfrei kontaktiert ist, wobei die Stromübertragung durch Druckkontakt erfolgt.

2. Stromübertragungselement zur Kontaktstromübertragung an flammgespritzte Kontaktschichten eines Kondensatorwickels, das aus einem gewobenen verzinnten Metallgewebe besteht,
wobei das Metallgewebe mit den flammgespritzten Kontaktschichten lötfrei kontaktiert ist, wobei die Stromübertragung durch Druckkontakt erfolgt.

3. Stromübertragungselement nach Anspruch 1,
bei dem die Metalldrähte aus verzinntem Kupfer bestehen.

4. Stromübertragungselement nach Anspruch 3,
bei dem das Metallmesh mit einer zusätzlichen Verzinnung - Zinnbrücken - versehen ist.

## Claims

1. Current transmission element for contact-current transmission to flame-sprayed contact layers of a capacitor winding,
which comprises a stretched metal mesh composed of tin-plated wires,
with the metal mesh making contact without the use of solder with the flame-sprayed contact layers, and with the current being transmitted by means of a pressure contact.

2. Current transmission element for contact current transmission to flame-sprayed contact layers in a capacitor winding, which comprises a woven tin-plated metal mesh, with the metal mesh making contact without the use of solder with the flame-sprayed contact layers, and with the current being transmitted by means of a pressure contact.

3. Current transmission element according to Claim 1,
in which the metal wires are composed of tin-plated copper.

4. Current transmission element according to Claim 3,
in which the metal mesh is provided with additional tin plating - tin links.

## Revendications

1. Élément de transmission de courant pour la transmission de courant de contact à des couches de contact métallisées à la flamme d'un enroulement de condensateur,
qui est constitué d'une toile métallique tricotée en fils étamés,
la toile métallique étant mise en contact sans brasure avec les couches de contact métallisées à la flamme, la transmission du courant s'effectuant par contact de pression.

2. Élément de transmission de courant pour la transmission de courant de contact à des couches de contact métallisées à la flamme d'un enroulement de condensateur,
qui est constitué d'un tissu métallique étamé tissé,
le tissu métallique étant mis en contact sans brasure avec les couches de contact métallisées à la flamme, la transmission du courant s'effectuant par contact de pression.

3. Élément de transmission de courant suivant la revendication 1, dans lequel les fils métalliques sont en cuivre étamé.

4. Élément de transmission de courant suivant la revendication 3, dans lequel la toile métallique est munie d'un étamage supplémentaire - pont d'étain.
